# FASCICULE DE BREVET EUROPEEN

(11) **EP 0 545 765 B1**
(45) Date de publication et mention de la délivrance du brevet: **31.05.1995**
(21) Numéro de dépôt: 92403131.3
(22) Date de dépôt: 20.11.1992
(51) Int. Cl.: F16F 9/32, F16F 9/38, B60G 13/00

(54) **Perfectionnement à une butée de limitation de course à caractéristiques de rigidité très progressive et soufflet intégré**
Verbesserung an einem weglimitierenden Anschlag, der eine fortschreitende Steifigkeit darstellt und einen integrierten Balg hat
Improvement to a path-limiting end-stop characterised by a progressive stiffness and having an integrated protective bellows

(30) Priorité: 29.11.1991 FR 9114932
(43) Date de publication de la demande: 09.06.1993
(73) Titulaire: CAOUTCHOUC MANUFACTURE ET PLASTIQUES, F-78000 Versailles (FR)
(72) Inventeur: de Fontenay, Etienne, F-58300 Decize (FR)
(74) Mandataire: Peuscet, Jacques

(56) Documents cités:
- EP-A- 0 382 645
- DE-A- 2 310 656
- DE-A- 3 151 771
- DE-C- 650 195
- DE-U- 1 811 684
- DE-U- 1 968 945
- GB-A- 895 798

## Description

L'invention est relative au domaine des suspensions à grande flexibilité, notamment les suspensions pour automobiles et toutes applications analogues, demandant une grande variation de flexibilité sur la course d'une butée de limitation de débattement concentrique à un amortisseur.

Dans la demande de brevet FR 89-01729 (FR-A-2643 122), est revendiquée une butée réalisée sous forme de moulage monobloc d'une composition élastomérique compacte. Cette invention est caractérisée en ce qu'elle est constituée de trois éléments de révolution superposés, reliés par une paroi mince formant charnière continue, située sur le petit diamètre desdits éléments. Ces éléments sont ainsi reliés, d'une part entre eux, d'autre part soit à une collerette de fixation au plan fixe, soit à une couronne portant des tétons de progressivité assurant le contact avec un plan mobile.
Elle est également caractérisée en ce que la butée est rendue stable en compression par l'entrée en contact d'arêtes circulaires avec les parois de l'élément en regard.

Le présent perfectionnement applique les mêmes caractéristiques à une butée de limitation de course dont le facteur de forme est beaucoup plus élevé mais restant, néanmoins, stable par un guidage supplémentaire.

Le présent perfectionnement est donc une butée de limitation de course à soufflet protecteur intégré, présentant des caractéristiques de rigidité très progressives, réalisée sous forme de moulage monobloc d'une composition élastomérique compacte, de butées unitaires formées de trois éléments à surface extérieure biconique ou de surface extérieure cylindrique au repos, autostables en compression, reliée à l'une de leurs extrémités, soit à une collerette d'appui soit à une couronne portant des tétons de progressivité, caractérisée en ce qu'elle est constituée par l'association en série d'au moins deux desdites butées unitaires formant un ensemble supérieur, un ensemble inférieur et éventuellement un ensemble intermédiaire, le dernier sans ladite collerette d'appui ou ladite couronne, en ce que lesdits ensembles sont reliés entre eux par une paroi de liaison, interne à une forte gorge centrale, entourant la paroi de liaison, et en ce que ladite paroi de liason coopère par emmanchement avec un manchon de guidage sur la tige d'un amortisseur, à laquelle tous ces composants sont coaxiaux, pour assurer la stabilité intrinsèque de la butée à soufflet intégré.

L'invention sera mieux comprise à la lecture de la description accompagnant les dessins, dans lesquels :
- la figure 1 représente, en demi-coupe axiale et demi-vue, une butée à soufflet intégré, de formes extérieures biconiques conformément au présent perfectionnement ;
- la figure 2 est une coupe axiale, à mi-course de son écrasement, d'une variante dont les formes extérieures sont cylindriques ;
- la figure 3 représente, également en coupe axiale, ladite butée à soufflet intégré à l'état de compression maximale.

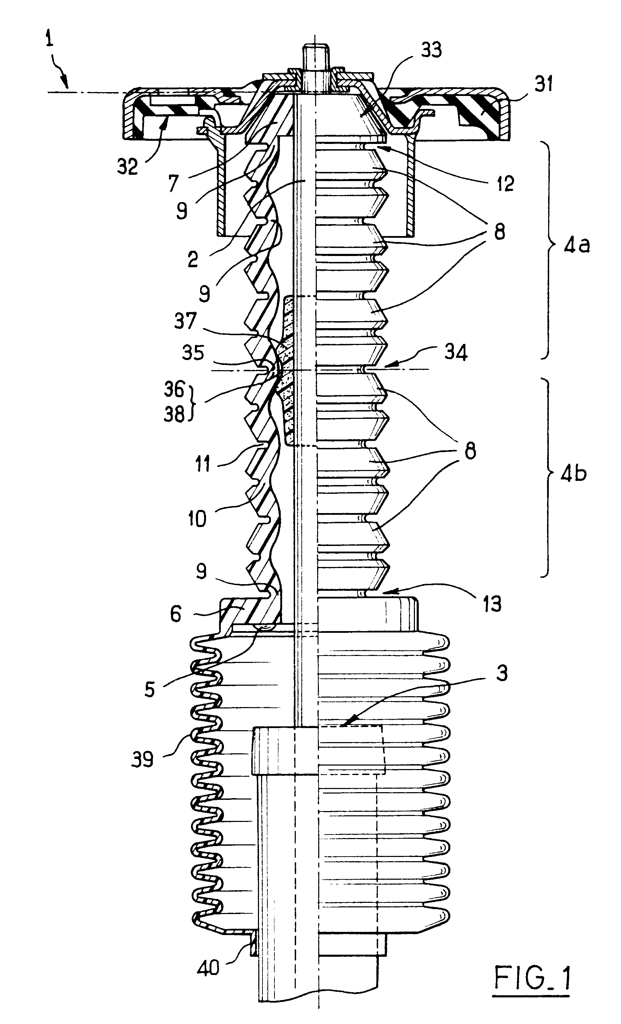

La figure 1 est une demi-coupe axiale, demi-vue d'une butée à soufflet intégré conforme au présent perfectionnement ; chacun des deux ensembles (4a) et (4b) qui la constituent est formé de trois éléments biconiques (8), reliés entre eux par une paroi mince formant charnière continue (9). Le plan d'appui (1) est ici représenté par une pièce d'appui (31), réalisée en polymère rigide ou en tôle d'acier emboutie, et noyée dans une composition élastomérique servant d'appui de ressort (32). Ladite pièce d'appui (31) vient enfermer, par des formes coniques (33), la collerette d'appui (7).

Venue de moulage monobloc avec l'ensemble supérieur (4a) qui la jouxte, la collerette d'appui (7) lui est reliée par une paroi mince formant charnière continue (9) et elle assure le centrage de la butée à soufflet intégré sur la tige (2) de l'amortisseur, du côté fixe, par exemple sur le chassis du véhicule.

L'ensemble inférieur (4b) est lui aussi relié par une paroi mince formant charnière continue (9) à une couronne (6) qui porte une série de tétons de progressivité (5) présentant un léger bombé, ceci pour éviter la brutalité du choc dynamique quand le plan mobile (3) vient en contact avec le matériau constitutif de la butée à soufflet intégré.

Une autre paroi mince (10) est située sur le grand diamètre de chacun des éléments biconiques (8) et présente un accroissement de diamètre lorsque l'écrasement de la paroi mince formant charnière continue (9) laisse se fermer la forte gorge entre éléments (11) qui l'entoure.
Les fortes gorges extrêmes (12) et (13) entourent également les parois minces formant charnière continue (9) qui relient les éléments biconiques (8) extrêmes d'une part à la collerette d'appui (7) pour l'ensemble supérieur (4a), d'autre part à la couronne (6) portant les tétons de progressivité (5) pour l'ensemble inférieur (4b).

Le présent perfectionnement repose essentiellement sur l'existence d'une paroi de liaison (35), entourée par la forte gorge centrale (34) qui sépare les éléments biconiques (8) contigus de l'ensemble supérieur (4a) et de l'ensemble inférieur (4b).
Ladite paroi de liaison (35) relie lesdits éléments biconiques (8) contigus et elle est de même nature que les autres parois minces (10), et d'épaisseur analogue. Mais, contrairement à ces dernières, elle est située, comme la paroi mince formant charnière continue (9), sur le diamètre intérieur des éléments biconiques (8). Lors de la compression, ladite paroi de liaison (35) est empêchée de venir se serrer, en appui sur la tige (2) de l'amortisseur, du fait de son emmanchement, lors de l'assemblage, par son diamètre intérieur (36) en forme de tore, sur un manchon de guidage (37), réalisé en polymère rigide, qui présente une gorge de fixation (38) en regard du tore constituant le diamètre intérieur (36) de ladite paroi de liaison (35).

Réalisé en polymère à propriétés autolubrifiantes, tel qu'un polyamide chargé de graphite, du polytétrafluorure d'éthylène ou une polyoléfine, ledit manchon de guidage (37) coulisse librement sur la tige (2) de l'amortisseur ; sa position en hauteur, lors d'un choc, est définie par l'égalité de l'écrasement des deux ensembles supérieur (4a) et inférieur (4b). Le caractère autostable en compression de chacun desdits ensembles est associé à ce libre coulissement, pour assurer le centrage et un encastrement de leur extrémité sans contact de la composition élastomérique avec la tige (2), lubrifiée, de l'amortisseur.

Sur la figure est représenté un soufflet protecteur (39) intégré à la butée progressive et solidarisé au cours du moulage, sous forme monobloc, dans le prolongement de la couronne (6) portant les tétons de progressivité (5). L'intégration dudit soufflet protecteur (39) au cours de la réalisation par moulage de la butée progressive est une variante d'assemblage qui constitue une solution avantageusement économique de fabrication. Les techniques modernes de moulage permettent d'envisager la réalisation du soufflet protecteur (39), intégré, dans une composition élastomérique éventuellement différente de celle utilisée pour les ensembles supérieur (4a) ou inférieur (4b).

Avant l'entrée en contact du corps de l'amortisseur formant le plan mobile (3), ledit soufflet protecteur (39) est libre de suivre ou non les débattements de suspension par une faible friction à jeu libre de son extrémité cylindrique (40) enveloppant ledit corps de l'amortisseur. Ainsi, l'état de surface lubrifié de la tige (2) est-il totalement à l'abri des intempéries, sans que des variations de pression de l'enceinte presque étanche ainsi constituée ne risquent d'être sources de bruit. Son rôle est similaire, dans cet effet, à celui des tétons de progressivité (5) qui évitent une trop parfaite étanchéité à l'air enfermé par l'ensemble inférieur (4b).

Le nombre d'ensembles constitutifs d'une butée à soufflet intégré, ici illustrée comme comportant deux desdits ensembles (4a) et (4b), n'est pas limité. L'association en série de trois ensembles - non représentée - est réalisable par l'assemblage de deux manchons de guidage (37) en regard de deux fortes gorges centrales entourant les parois de liaison (35) entre éléments contigus.

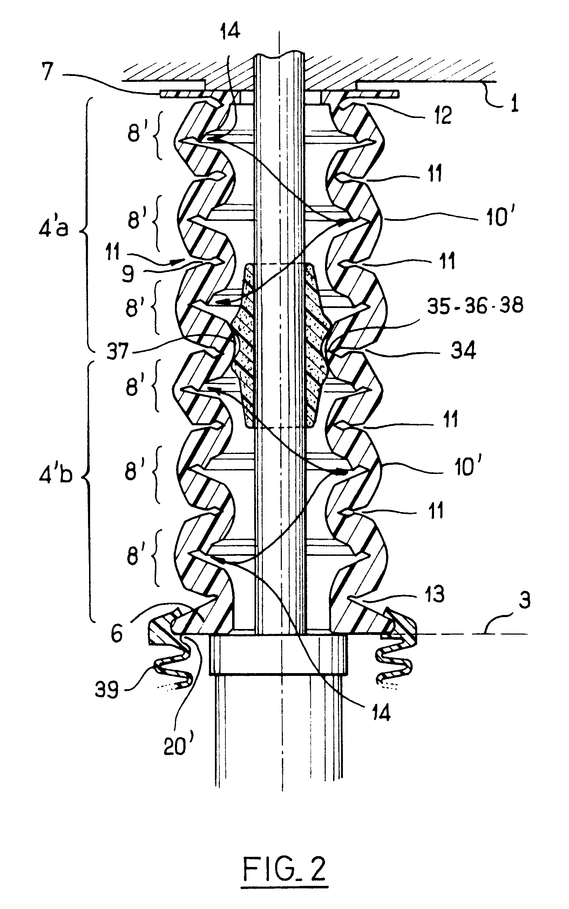

La figure 2 est une coupe axiale de la variante à surface extérieure cylindrique, rappelant la position intermédiaire de fonctionnement, à mi-course. La position déformée des ensembles supérieur (4'a) et inférieur (4'b), à surface extérieure cylindrique au repos, présente une grande analogie avec celle de la variante comprenant des ensembles (4a) et (4b) à surface extérieure biconique, représentée au repos dans la figure précédente.

Les ensembles supérieur (4'a) et inférieur (4'b) sont tous deux formés d'éléments (8'), identiques, reliés par les parois minces formant charnières continues (9) qui disparaissent au moment où se ferment les fortes gorges entre éléments (11), ainsi que les fortes gorges extrêmes (12) et (13) reliant les éléments extrêmes à la collerette (6) et à la couronne (7). Il en est de même de la forte gorge centrale (34) dont la fermeture fait disparaître la paroi de liaison (35).

La butée à soufflet intégré est représentée dans l'état où les autres parois minces (10') commencent à augmenter de diamètre et où les arêtes circulaires (14) vont entrer en contact avec la paroi intérieure des éléments de surface externe cylindriques (8'), qui leur est contigue, créant alors l'hétérogénéité de contraintes favorable à l'autostabilité d'un ensemble supérieur (4'a) ou inférieur (4'b).

Du fait du doublement de longueur de l'empilage, le rôle de l'encastrement qui caractérisé l'autostabilité des ensembles supérieur (4'a) et inférieur (4'b) n'intervient qu'à une des extrémités sur la collerette (6) ou sur la couronne (7). A l'autre extrémité de chaque ensemble, la fermeture de ladite forte gorge centrale (34) provoque l'encastrement sur le manchon de guidage (37) de la paroi de liaison (35), écrasée de façon multidirectionnelle sur son diamètre intérieur (36). La pression radiale ainsi engendrée sur la gorge de fixation (38), autour de laquelle pourrait avoir tendance à basculer la forme torique dudit diamètre intérieur (36), est alors un gage d'encastrement efficace contre un effet de rotule instable des deux ensembles supérieur (4'a) et inférieur (4'b) montés élastiquement en série.
Une telle pression radiale limite l'instabilité qui résulterait du facteur de forme trop élevé de l'empilage, par exemple la hauteur totale étant de l'ordre de quatre fois le diamètre à l'état libre.

Dans cette variante, le soufflet protecteur (39) est assemblé par serrage sur une nervure massive (20') qui est disposée autour de la collerette (6) portant les tétons de progressivité (5). Il est bien évident pour l'homme de l'art que la nervure massive (20') peut être incorporée entre deux éléments (8,8') de l'ensemble supérieur (4a, 4'a) comme de l'ensemble inférieur (4b, 4'b).

Comme dans la variante où le soufflet protecteur (39) est intégré à la butée progressive par moulage sous forme monobloc, la composition élastomérique qui le constitue peut être d'une nature identique à celle des ensembles (4'a, 4'b) ou d'une nature différente.

Cet assemblage mécanique permet, sans altérer les fonctions multiples de la butée à soufflet intégré, de simplifier l'empreinte des moules et d'alléger l'opération de démoulage par fabrication séparée des composants.

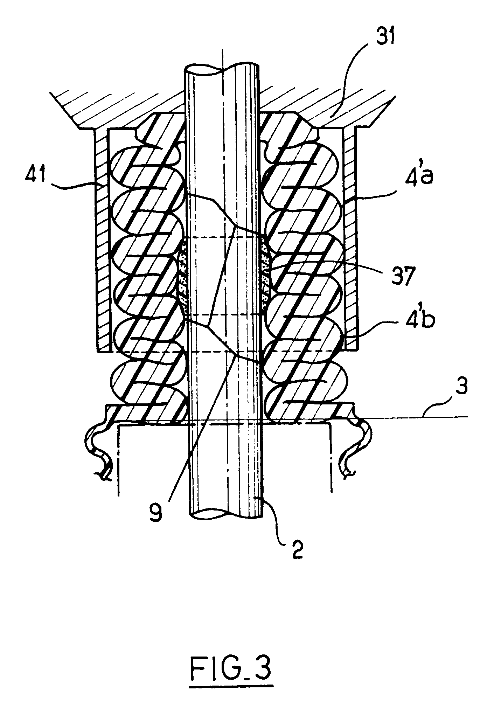

La figure 3 représente les circonstances où le risque d'instabilité est maximal, à l'état de compression totale. Le basculement est évité également par le guidage cylindrique externe (41) qui prolonge la pièce d'appui (31), pour venir confiner le diamètre extérieur de la butée à soufflet intégré, en écrasement total.

Présentant alors les apparences d'un bloc quasi massif, dont la compressibilité n'est plus possible que par accroissement de diamètre lorsque la hauteur diminue, la butée à soufflet intégré, dont chaque ensemble supérieur (4a) et inférieur (4b) est stable, se présente sous forme d'un bloc plus haut que large, qui serait instable à la compression si sa partie centrale n'était guidée par un serrage radial sur le manchon de guidage (37), rigide et coulissant librement sur la tige (2) de l'amortisseur. Par ailleurs, le confinement par le guidage cylindrique externe (41) est également un moyen d'accroître la rigidité en fin de compression de la butée à soufflet intégré, aux formes très élancées, forme qui, normalement, rendrait insuffisante pour l'application sa rigidité de compression.

Un mode de fabrication de ladite butée à soufflet intégré est un moulage par transfert ou par injection de la (ou des) composition(s) élastomérique(s), en moule fermé, sur un noyau annelé. La grande déformabilité de la pièce en permet le démoulage, après vulcanisation de la composition élastomérique qui en fige les formes.

La réalisation par moulage, sous forme monobloc ou par moulage séparé des composants suivi d'un assemblage mécanique, est complétée d'un montage, au moyen d'un vérin qui force le manchon de guidage, introduit à travers l'intérieur annelé de la butée à soufflet intégré, vers sa position définitive en regard de la forte gorge centrale (34), marquant le plan médian de ladite butée.

Toute combinaison entre un moyen d'assemblage de soufflet protecteur (39) et toute association en série de formes intermédiaires entre les deux variantes à formes extérieures biconiques ou à formes extérieures cylindriques au repos peuvent être envisagées par l'homme de l'art sans sortir du cadre de l'invention.

## Revendications

1. Butée de limitation de course à soufflet protecteur (39) intégré, présentant des caractéristiques de rigidité très progressives, réalisée sous forme de moulage monobloc d'une composition élastomérique compacte de butées unitaires formées de trois éléments à surface extérieure biconique (8a, 8b) ou de surface extérieure cylindrique au repos (8'a, 8'b), autostables en compression, reliée à l'une de leurs extrémités soit à une collerette d'appui (7) soit à une couronne (6) portant des tétons de progressivité (5), caractérisée en ce qu'elle est constituée par l'association en série d'au moins deux desdites butées unitaires formant un ensemble supérieur (4a, 4'a), un ensemble inférieur (4b, 4'b) et éventuellement un ensemble intermédiaire, le dernier sans ladite collerette d'appui (7) ou ladite couronne (6), en ce que lesdits ensembles (4a et 4b, 4'a et 4'b) sont reliés entre eux par une paroi de liaison (35), interne à une forte gorge centrale (34) entourant la paroi de liason (35) et en ce que ladite paroi de liaison (35) coopère par emmanchement avec un manchon de guidage (37) sur la tige (2) d'un amortisseur, à laquelle tous ces composants sont coaxiaux, pour assurer la stabilité intrinsèque de la butée à soufflet intégré.

2. Butée de limitation de course à soufflet intégré selon la revendication 1, caractérisée en ce que le soufflet protecteur (39) en est rendu partie intégrante dans le prolongement de la couronne (6) portant les tétons de progressivité (5), du fait d'un moulage monobloc.

3. Butée de limitation de course à soufflet intégré selon la revendication 1, caractérisée en ce que le soufflet protecteur (39), amovible, est assemblé sur une nervure massive (20') de l'ensemble inférieur (4b, 4'b) ou de l'ensemble supérieur (4a, 4'a).

4. Butée de limitation de course à soufflet intégré selon l'une des revendications 1 à 3, caractérisée en ce que sa longueur libre avant contact du plan mobile (3) sur les tétons de progressivité (5) est de l'ordre de quatre fois le diamètre extérieur des ensembles supérieurs (4a, 4'a) ou inférieurs (4b, 4'b).

5. Butée de limitation de course à soufflet intégré selon l'une des revendications 1 à 4, caractérisée en ce que le manchon de guidage (37) est réalisé en un polymère rigide autolubrifiant.

6. Butée de limitation de course à soufflet intégré selon la revendication 5, caractérisée en ce que le polymère rigide autolubrifiant du manchon de guidage (37) est un polyamide chargé de graphite.

## Claims

1. Travel-limiting end-stop with built-in protective gaiter (39), exhibiting very progressive stiffness characteristics, produced in the form of a single-piece moulding of a compact elastomeric composition of unitary end-stops which are formed of three elements with a biconical exterior surface (8a, 8b) or of cylindrical exterior surface at rest (8'a, 8'b), inherently stable in compression, joined at one of their ends either to a bearing collar (7) or to a ring (6) carrying progressiveness studs (5), characterized in that it consists of joining together, in series, at least two of the said unitary end-stops forming an upper assembly (4a, 4'a), a lower assembly (4b, 4'b) and possibly an intermediate assembly, the latter without the said bearing collar (7) or the said ring (6), in that the said assemblies (4a and 4b, 4'a and 4'b) are joined together by an internal linking wall (35) with a deep central groove (34) surrounding the linking wall (35), and in that the said linking wall (35) interacts, through nesting together, with a guide bushing (37) on the rod (2) of a shock absorber, with which rod all these components are coaxial, in order to ensure the intrinsic stability of the end-stop with built-in gaiter.

2. Travel-limiting end-stop with built-in gaiter according to Claim 1, characterized in that the protective gaiter (39) is rendered an integral part thereof in the extension of the ring (6) carrying the progressiveness studs (5), owing to a single-piece moulding.

3. Travel-limiting end-stop with built-in gaiter according to Claim 1, characterized in that the removable protective gaiter (39) is assembled onto a solid rib (20') of the lower assembly (4b, 4'b) or of the upper assembly (4a, 4'a).

4. Travel-limiting end-stop with built-in gaiter according to one of Claims 1 to 3, characterized in that its free length before the moving plane (3) comes into contact with the progressiveness studs (5) is of the order of four times the outside diameter of the upper assemblies (4a, 4'a) or lower assemblies (4b, 4'b).

5. Travel-limiting end-stop with built-in gaiter according to one of Claims 1 to 4, characterized in that the guide bushing (37) is made from a self-lubricating rigid polymer.

6. Travel-limiting end-stop with built-in gaiter according to Claim 5, characterized in that the self-lubricating rigid polymer of the guide bushing (37) is a graphite-filled polyamide.

## Patentansprüche

1. Weglimitierender Anschlag mit integriertem Schutzbalg (39), der eine progressive Steifigkeit aufweist, in Gestalt einer einstückigen Form aus einer festen Elastomerzusammensetzung mit einheitlichen Anschlägen, die durch drei Elemente mit in der Ruhestellung bikonischen (8a, 8b) oder zylindrischen (8'a, 8'b) Außenflächen gebildet werden, die zusammengedrückt selbststabilisierend sind, die an einem ihrer Enden entweder mit einem Stützkragen (7) oder mit einem Kranz (6) verbunden sind, der progressiv dämpfende Ansätze (5) aufweist, dadurch gekennzeichnet, daß der weglimitierende Anschlag durch die Aneinanderreihung von wenigstens zwei der genannten einheitlichen Anschläge gebildet ist, die eine obere (4a, 4'a) und eine untere (4b, 4'b) sowie ggf. eine mittlere Anordnung bilden, wobei letzterer ohne Stützkragen (7) oder ohne den genannten Kranz (6) ausgebildet ist, daß die genannten Anordnungen (4a und 4b, 4'a und 4'b) durch eine Wandung (35) im Inneren einer starken zentralen Einschnürung (34) verbunden sind, wobei die Einschnürung (34) die Wandung (35) umgibt und daß die Wandung (35) durch Eingreifen in eine auf der Stange (2) eines Stoß- oder Schwingungsdämpfers angeordneten Führungshülse (37) mit dieser zusammenwirkt, zu welcher alle genannten Bauteile koaxial angeordnet sind, um die eigentliche Stabilität des Anschlags mit integriertem Balg zu gewährleisten.

2. Weglimitierender Anschlag mit integriertem Balg nach Anspruch 1, dadurch gekennzeichnet, daß der Schutzbalg (39) aufgrund der einstückigen Form ein integraler Bestandteil des weglimitierenden Anschlags in der Verlängerung des Kranzes (6) ist, der die progressiv dämpfenden Ansätze (5) trägt.

3. Weglimitierender Anschlag mit integriertem Balg nach Anspruch 1, dadurch gekennzeichnet, daß der Schutzbalg (39), der versetzbar ist, auf einem massiven Bund (20') der unteren (4b, 4'b) oder der oberen Anordnung (4a, 4'a) befestigt ist.

4. Weglimitierender Anschlag mit integriertem Balg nach einem der Ansprüche 1 bis 3, dadurch gekennzeichnet, daß die freie Länge vor dem Aufsetzen der beweglichen Ebene (3) auf den progressiv dämpfenden Ansätzen (5) in der Größenordnung von dem vierfachen Außendurchmesser der oberen (4a, 4'a) oder unteren Anordnung (4b, 4'b) beträgt.

5. Weglimitierender Anschlag mit integriertem Balg nach einem der Ansprüche 1 bis 4, dadurch gekennzeichnet, daß die Führungshülse (37) aus einem festen, selbstschmierenden Polymer gebildet ist.

6. Weglimitierender Anschlag mit integriertem Balg nach Anspruch 5, dadurch gekennzeichnet, daß das feste, selbstschmierende Polymer ein mit Graphit angereichertes Polyamid ist.
